# EUROPÄISCHE PATENTSCHRIFT

(11) **EP 1 321 636 B1**
(45) Veröffentlichungstag und Bekanntmachung des Hinweises auf die Patenterteilung: **24.01.2007**
(21) Anmeldenummer: 02028291.9
(22) Anmeldetag: 17.12.2002
(51) Int. Cl.: F01M 11/04

(54) **Schraubverschluss für Flüssigkeitsbehälter, insbesondere einer Ölwanne für Kraftfahrzeuge**
Plug for liquid storing reservoir particularly for engine oilsump
Bouchon pour réservoir à liquide en particulier pour carter d'huile de moteur à combustion

(30) Priorität: 18.12.2001 DE 20120432 U
(43) Veröffentlichungstag der Anmeldung: 25.06.2003
(73) Patentinhaber: KTSN Kunststofftechnik Sachsen GmbH & Co. KG, 01796 Pirna (DE)
(72) Erfinder: Rentsch, Frank, 01936 Königsbrück (DE); Meissner, Mario, 01097 Dresden (DE)
(74) Vertreter: Tragsdorf, Bodo

(56) Entgegenhaltungen:
- US-A- 3 879 013
- US-A- 4 205 758

## Beschreibung

Die Erfindung betrifft einen Schraubverschluss für Flüssigkeitsbehälter, insbesondere eine Ölablassschraube, die im Bodenbereich der Ölwanne eines mit einem Kurbelgehäuse versehenen Kraftfahrzeuges angeordnet ist.

Es ist allgemein bekannt, dass die Ölablassschraube mit ihrem Gewindeabschnitt in die im Boden der Ölwanne befindliche Ablassöffnung eingeschraubt wird. Zur Abdichtung zwischen der Ölablassschraube und dem Ölwannenabschnitt ist auf die Ölablassschraube ein Kupferring aufgesetzt. Die Ölablassschraube wird mit einem konstanten Anzugsmoment eingeschraubt. Bei Überschreitung des vorgesehenen Anzugsmomentes kann entweder die Ölwanne beschädigt oder das Gewinde zerstört werden.
Aus der DE 42 32 893 A1 ist eine Ölablassschraube bekannt, die aus einem Schraubenelement und einem Dichtungselement besteht. Das Schraubenelement besitzt einen radial vorspringenden Flansch, an den sich in Einschraubrichtung ein schulterförmiges Anschlagelement mit einer sich axial erstreckenden ringförmigen Fläche und einer ringförmigen Stirnfläche anschließt, das einen geringeren Durchmesser als der Flansch aufweist. Beim Festziehen der Schraube gelangt die Stirnfläche des Anschlagelementes in Kontakt mit dem abgedrehten Rand der Ölwanne. Dieser Kontakt erzeugt ein zusätzliches Ansteigen des Drehmomentes, wodurch der Ratschenmechanismus des Drehmomentenschlüssels ausgelöst wird und keine weitere Schraubbewegung mehr erfolgt.
Diese Schraubverbindung erfordert den Einsatz eines Drehmomentenschlüssels mit Ratschenmechanismus. Von Nachteil ist auch, dass die Ölablassschraube mit keiner Selbstsicherung ausgerüstet ist und sich gegebenenfalls lösen kann und die erforderliche Abdichtung nicht mehr gewährleistet ist.

Der Erfindung liegt die Aufgabe zugrunde, einen Schraubverschluss für Flüssigkeitsbehälter, insbesondere eine Ölablassschraube, die im Bodenbereich der Ölwanne eines mit einem Kurbelgehäuse versehenen Kraftfahrzeuges angeordnet ist, zu schaffen, der einen verbesserten Überdrehschutz gewährleistet und zusätzlich eine Selbstsicherung ermöglicht.

Erfindungsgemäß wird die Aufgabe durch die im Anspruch 1 angegebenen Merkmale gelöst. Geeignete Ausgestaltungen und Weiterbildungen sind Gegenstand der Ansprüche 2 bis 14.
Um den die Ablassöffnung des Flüssigkeitsbehälters, z.B. einer Ölwanne, umgebenden Boden- oder Wandabschnitt ist ein in den Behälter ragender Dom angeordnet. Der Dom besitzt an seinem unteren Ende mindestens eine seitliche Öffnung. In dem Dom ist ein ein Innengewinde aufweisendes Schraubelement drehbar gehalten, in das die Ablassschraube eindrehbar ist. Die Ablassöffnung ist halsförmig ausgebildet, wobei der halsförmige Abschnitt nach außen gerichtet ist. Die Ablassschraube ist mit einem Dichtring zur radialen Abdichtung der halsförmigen Ablassöffnung versehen. Das in dem Dom befindliche Schraubelement steht mit einer in dem Dom angeordneten unter Vorspannung einer Druckfeder stehenden Überdrehschutzeinheit in Wirkverbindung. Die Überdrehschutzeinheit steht nach Erreichen der Endstellung der eingedrehten Ablassschraube mit dieser in Berührungskontakt und verhindert ein weiteres Eindrehen der Ablassschraube. Dadurch kann das Anzugsmoment beim Eindrehen der Ablassschraube nicht überschritten werden und eine Beschädigung des Gewindes bzw. des die Ablassöffnung umgebenden Randabschnittes des Behälters wird somit verhindert. Die in dem Dom angeordnete Überdrehschutzeinheit besteht aus einem Wellring und einem auf diesem aufliegenden Klauenring, wobei der Wellring axial verschiebbar und drehbar gelagert und formschlüssig mit dem Schraubelement verbunden ist. Der Klauenring, an dem die Druckfeder anliegt, ist axial verschiebbar und gegen Verdrehen gesichert. Die benachbarten Kontaktflächen von Wellring und Klauenring sind mit einer ineinander eingreifbaren Verzahnung ausgerüstet, wobei die Zähne eine gerade Zahnflanke und eine als schiefe Ebene ausgebildete Zahnflanke aufweisen. Durch ein gegenläufiges Auflaufen der als schiefe Ebene ausgebildeten Zahnflanken beim Eindrehen der Ablassschraube erfolgt nach Erreichen der Endstellung der Ablassschraube ein Überschnappen und Durchdrehen des Wellringes. Beim Lösen der Ablassschraube gelangen Wellring und Klauenring über die geraden Zahnflanken miteinander in Eingriff. Zwischen den beiden in Eingriff stehenden Verzahnungen von Wellring und Klauenring ist zur Realisierung des Überschnappvorganges ein definiertes radiales Spiel vorhanden. Das Schraubelement besteht aus einer ringförmigen Scheibe mit einer aufgesetzten Schraubmutter. In dem Unterteil des Wellringes ist eine passgenaue Ausnehmung zur Aufnahme der Schraubmutter angeordnet. Der Wellring besteht aus einem ringförmigen Unterteil und einem zylinderförmigen Schaft, wobei der Klauenring mit seiner ringförmigen Ausnehmung auf den Schaft aufgesteckt ist. Schraubenfeder, Klauenring, Wellring und Nuss werden durch Einsetzen des Sicherungsringes in den unteren Abschnitt in dem oberen Abschnitt des Domes gehalten. Der Dom besitzt an seinem unteren Ende mehrere seitlich vorstehende Flanschabschnitte, die in im Boden- bzw. Wandabschnitt befindlichen Führungen eingesetzt sind, in der Art eines Bajonettverschlusses. Mittels selbstschneidender Kunststoffschrauben wird der Dom an dem entsprechenden Behälterabschnitt befestigt. Der Dom weist in dem unteren Abschnitt, in Höhe der Befestigungsstellen, mehrere am Außenumfang verteilte Öffnungen auf. Die halsförmige Ablassöffnung im Bereich des Bodenteils einer Ölwanne ist als ringförmiger Bund ausgeführt und der an die Ablassöffnung angrenzende Bodenabschnitt ist eben ausgebildet. Da sich die Öffnungen des Domes in Höhe des ebenen Bodenabschnittes befinden wird gewährleistet, dass das in der Ölwanne befindliche Öl im Bedarfsfall vollständig abläuft. Der leicht konisch verlaufende Innenraum des Domes ist in einen oberen, Abschnitt und einen unteren Abschnitt unterteilt, wobei am oberen Ende des unteren Abschnittes der Sicherungsring in einer zylindrischen Nut gehalten wird. In dem oberen Abschnitt sind an der Innenwandung mehrere vertikal verlaufende Führungselemente angeordnet, um den Klauenring in Einbaulage gegen Verdrehen zu sichern.
Die Ablassschraube besitzt einen unteren Flansch einen sich daran anschließenden Schaft und einen abschließenden Gewindeabschnitt, wobei der Flansch sich über die gesamte Höhe der hals- bzw. ringbundförmigen Ablassöffnung erstreckt und eine umlaufende Ringnut zur Aufnahme des Dichtringes aufweist. Der Schaft ist radial zurückgesetzt und hat eine obere Stirnfläche, die beim Eindrehen der Ablassschraube in die Schraubmutter mit der ringförmigen Scheibe des Schraubelementes in Berührungskontakt gelangt. An der Unterseite des Wellringes befinden sich Profilierungen, die in entsprechende Ausnehmungen an der oberen Stirnseite des Gewindeabschnittes der Ablassschraube eingreifen. Dadurch wird die Selbstsicherung der Ablassschraube, die durch die axial auf die Schraube wirkende Kraft der Druckfeder entsteht, noch unterstützt.
Eines oder mehrere der Bauteile Dom, Nuss, Ablassschraube, Klauenring und Wellring können als spritzgegossenes Kunststoffbauteile hergestellt werden.

Die Erfindung soll nachstehend an einem Ausführungsbeispiel erläutert werden. In der zugehörigen Zeichnung zeigen
- Fig. 1: den die Ablassöffnung des Bodenteils einer Ölwanne umgebenden Randbereich mit einem aufgesetzten Dom, als Längsschnitt,
- Fig. 2: einen Schnitt gemäss der Linie A-A in Fig. 1,
- Fig. 3: den am Boden einer Ölwanne befestigten Dom mit den eingesetzten Einzelteilen des Schraubverschlusses in der Stellung vor dem Eindrehen der Ablassschraube, als Längsschnitt,

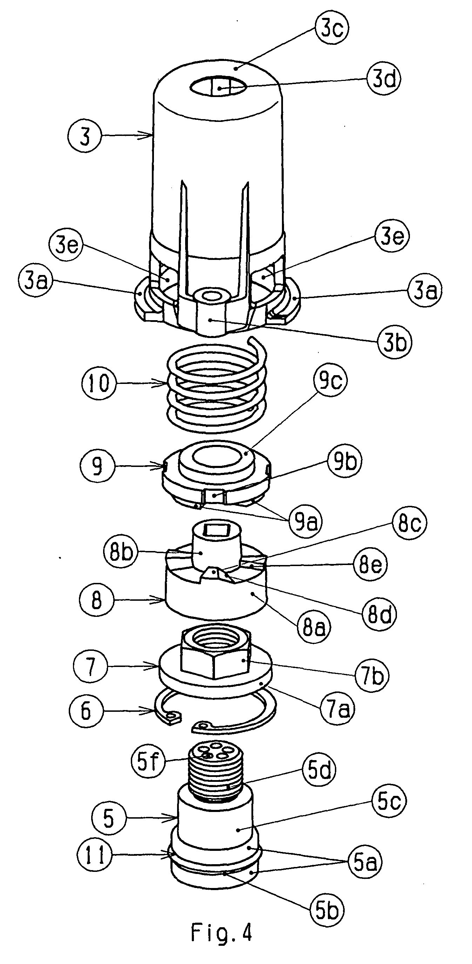

- Fig. 4: die Einzelteile des Schraubverschlusses als Explosionsdarstellung und
- Fig. 5: den Schraubverschluss nach dem Eindrehen der Ablassschraube in der Verschlussstellung, als Längsschnitt.

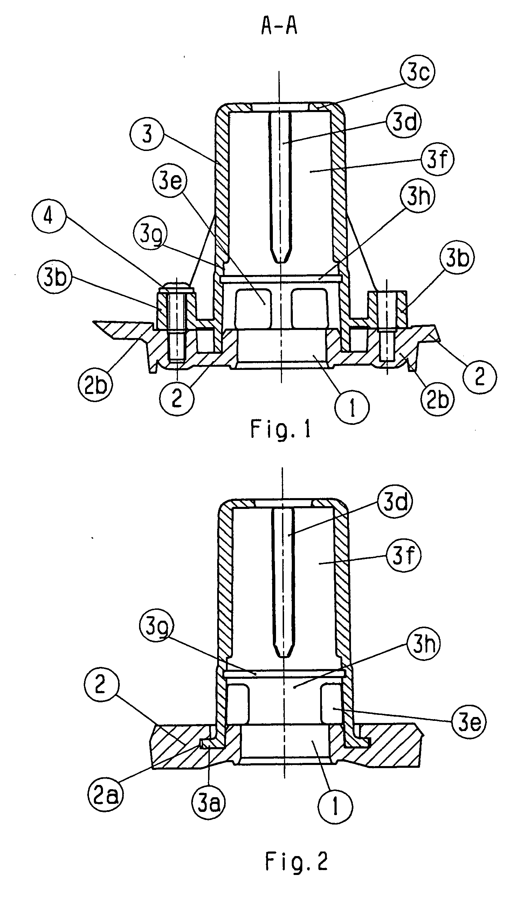

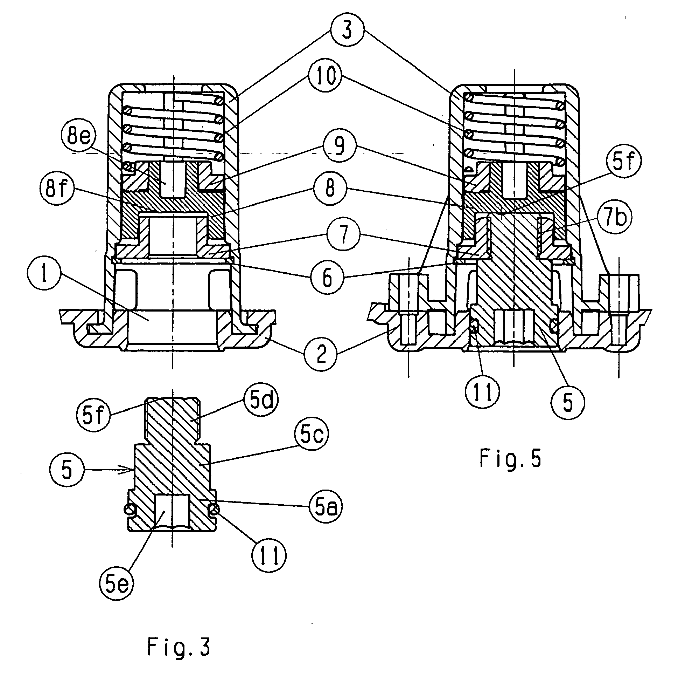

Wie in den Figuren 1 und 2 gezeigt, ist um die von einem ringförmigen Bund umgebene Ablassöffnung 1 des Bodenteils 2 der Ölwanne an dem Bodenteil 2 ein nach innen ragender Dom 3 befestigt. Der Dom 3 besitzt an seinem in Bodenrichtung zeigenden Ende zwei einander gegenüberliegende seitlich vorstehende Flanschabschnitte 3a, die in im Bodenteil 2 angeordneten Führungen 2a eingesetzt sind. Zwischen den Flanschabschnitten 3a befinden sich einander gegenüberliegend zwei Befestigungsteilen 3b zur Befestigung des Domes 3 mittels selbstschneidender Kunststoffschrauben 4 an dem Bodenteil 2. Die Befestigungsstellen 3b sind so ausgebildet, dass die selbstschneidenden Schrauben 4 durch die Länge der Durchgangsbohrungen so geführt werden, dass ein schiefes Einschrauben der selbstschneidenden Schrauben 4 ausgeschlossen wird.
Der Dom 3 weist einen nach leicht konisch verlaufenden Hohlraum zur Aufnahme der Einzelteile des Schraubverschlusses auf, der in einen oberen Abschnitt 3f und einen unteren Abschnitt 3h geringerer Bauhöhe unterteilt ist. An der Innenseite der den oberen Abschnitt 3f begrenzenden Wandung befinden sich vier in gleichem radialen Abstand angeordnete vertikal verlaufende Stege bzw. Nasen 3d, die als Führungselemente für den Klauenring 9 des Schraubverschlusses dienen. Am oberen Ende des unteren Abschnittes 3h ist an der Innenwandung eine umlaufende, zylindrische Nut 3g zur Aufnahme des einzusetzenden Sicherungsringes 6 angeordnet. Außerdem befinden sich in dem unteren Abschnitt 3h des Domes 3, im Bereich zwischen den Befestigungsstellen 3b, vier am Außenumfang verteilte Öffnungen 3e, durch die im Bedarfsfall das Öl vollständig ablaufen kann, da sich die Öffnungen 3e in Höhe des ebenen Bodenabschnitts der Ölwanne befinden.
Der aus Kunststoff hergestellte Dom 3 ist lediglich aus entformungstechnischen Gründen innen und außen leicht konisch ausgebildet. Der Dom kann auch als zylinderförmiges Bauteil ausgebildet sein.
Die Einzelzeile des in den Dom 3 einsetzbaren Verschlusses bestehen aus einer Schraubenfeder 10, deren oberes Ende an der Innenseite des Kopfteils 3c des Domes 3 anliegt, einem Klauenring 9, einem Wellring 8, einer Nuss bzw. Schraubelement 7 und dem Sicherungsring 6. Schraubenfeder 10, Klauenring 9, Wellring 8 und Nuss 7 werden durch den in die Ringnut 3g eingesetzten Sicherungsring 6 in dem oberen, Abschnitt 3f gehalten. Ein zu weites Einbringen der Ablassschraube 5 in axialer Richtung in den Abschnitt 3f wird dahingehend verhindert, dass die Nuss 7 sich mit dem Flansch 7a gegen die Unterseite der Nasen 3d abstützt (axiales Spiel der Nuss 7 ca. 1 mm).
Die Ablassschraube 5 wird mit ihrem oberen Gewindeabschnitt 5d in das Innengewinde der Nuss 7 eingeschraubt und besitzt einen unteren zylinderförmigen Flansch 5a, dessen Außendurchmesser dem Innendurchmesser der Ablassöffnung 1 unter Berücksichtigung des erforderlichen Spiels entspricht. In den Flansch 5a ist eine umlaufende Ringnut 5b zur Aufnahme eines elastomeren Dichtringes 11 eingearbeitet. An den Flansch 5a schließt sich in Achsrichtung nach oben ein zylinderförmiger Schaft 5c an, dessen Außendurchmesser kleiner ist als der Außendurchmesser des Flansches 5a. Oberhalb des Schaftes 5c ist der Gewindeabschnitt 5d der Schraube 5 angeordnet, der in seinem Außendurchmesser kleiner als der Schaft 5c ist. In den Flansch 5a ist noch eine Aufnahme 5e für einen Steckschlüssel eingearbeitet. Der Sicherungsring 6 ist in der Ringnut 3g, die sich im unteren Abschnitt 3h des Domes 3 befindet, eingesetzt. Auf dem Sicherungsring 6 liegt die Nuss 7 auf, die aus einer ringförmigen Scheibe 7a mit einer aufgesetzten Sechskantmutter 7b besteht. Die Nuss 7 wird in den Abschnitt 3f des Domes 3 eingesetzt und ist in der Einbaulage drehbar und durch den Sicherungsring 6 in dem Dom 3 gehalten. Ein weiteres Einschieben der Nuss 7 ist nicht möglich, da diese gegen die Nasen bzw. Stege 3d anschlägt. Der Wellring 8 besteht aus einem unteren ringförmigen Teil 8a, dessen Außendurchmesser kleiner als der Außendurchmesser des Flansches 7a der Nuss 7 ist, und einem oberen nahezu zylinderförmigen Schaft 8b mit einem wesentlich kleineren Außendurchmesser. Aufgrund der leicht konischen Ausführung des Innenraumes des Domes 3 besitzen der Schaft 8b und das untere Teil 8a ebenfalls eine leicht konisch verlaufende Mantelfläche, um einen passgenauen Sitz in Einbaulage zu gewährleisten. Das untere annähernd ringförmige Teil 8a, besitzt eine der Außenkontur der Mutter 7b angepasste sechskantförmige Ausnehmung zur Aufnahme der Sechskantmutter 7b, so dass in der Einbaulage die Nuss 7 und der Wellring 8 formschlüssig miteinander verbunden sind. Der Wellring 8 ist ebenfalls wie die Nuss 7, drehbar in dem Dom 3 gelagert. Die nach oben zeigende Stirnfläche des unteren Teils 8a des Wellringes 8 ist mit einer umlaufenden Verzahnung versehen, wobei eine Zahnflanke 8e der Zähne 8c gerade und die gegenüberliegende Zahnflanke 8d als schiefe Ebene ausgebildet ist. Die einzelnen Zähne 8c besitzen eine gerade verlaufende obere Stirnfläche. Der nachfolgende Klauenring 9 ist auf das obere Teil 8b des Wellringes 8 aufgesetzt und besitzt an seiner Unterseite eine mit der Verzahnung des Klauenringes 8 korrespondierende Verzahnung 9a, die in die Verzahnung des Wellringes 8 eingreifbar ist. Zwischen den beiden Verzahnungen von Wellring 8 und Klauenring 9 besteht ein radiales Spiel. Durch ein gegenläufiges Auflaufen der als schiefe Ebene ausgebildeten Zahnflanken von Wellring 8 und Klauenring 9 wird ein sogenanntes Überschnappen der Verzahnungen bewirkt. Der Wellring 8 und der Klauenring 9, die ineinander verschachtelt angeordnet sind, sind im Dom 3 axial beweglich gelagert. Am Außenumfang des Klauenringes 9 sind Nuten 9b eingearbeitet, die in die an der Innenwandung des Domes 3 befindlichen Stege bzw. Nasen 3d eingreifen, so dass der Klauenring 9 gegen Verdrehen gesichert ist. Der Klauenring 9 besitzt an seiner Oberseite noch einen radial zurückgesetzten Ringbund 9c, der als Aufnahme für die Druckfeder 10 dient. Die Nuss 7, der Wellring 8 und der Klauenring 9 werden in Einbaulage durch die Vorspannung der Druckfeder 10 gegen den Sicherungsring 6 gedrückt.
Die Funktionsweise des Schraubverschlusse ist folgende.
Nach dem Einbau der Bauteile Druckfeder 10, Klauenring 9, Wellring 8, Nuss 7 und Sicherungsring 6 in den Dom, wie in Fig. 3 gezeigt, wird die Schraube 5 mit dem eingelegten 0-Ring 11 in das Innengewinde der Mutter 7b der Nuss 7 eingedreht. Aufgrund der unter Vorspannung durch die Druckfeder 10 in dem Dom 3 gehaltenen Bauteile Klauenring 9, Wellring 8 und Nuss 7 wird beim Einschrauben der Schraube 5 ein Mitdrehen der Nuss 7 verhindert. Beim Einschrauben stößt die Schraube 5 zuerst mit ihrer oberen Stirnfläche gegen die Unterseite des Wellringes 8. Durch weiteres Eindrehen der Schraube 5 wird der Wellring 8 zusammen mit dem Klauenring 9 angehoben, wie in Fig. 5 zu sehen ist. Durch die axial auf die Schraube 5 wirkende Kraft der Druckfeder wird eine Selbstsicherung der Schraube 5 bewirkt. Durch eine Profilierung der Kontaktflächen Schraube/Nuss kann die Wirkung der Selbstsicherung noch erhöht werden. Hierzu sind z. B. an der Unterseite des Wellringes 8 fünf punktförmige Noppen 8f angeordnet, die in korrespondierende Ausnehmungen 5f an der oberen Stirnseite der Schraube 5 eingreifen.
Während des Einschraubvorganges wird der in der Ringnut 5b befindliche Dichtungsring 11 verformt und dabei gegen die Innenwandung der Ablassöffnung 1 gedrückt und somit die erforderliche Dichtheit hergestellt. Beim weiteren Eindrehen der Schraube 5 gelangt die obere Stirnseite des Schaftes 5c in Berührungskontakt mit der Nuss 7. Bei Erreichen dieses Anschlages ist die gewünschte Endstellung der Schraube 5 erreicht. Durch ein nunmehr unerwünschtes Weiterdrehen der Schraube 5 - ein sogenanntes Überdrehen - werden Nuss 7 und Wellring 8 mitgedreht. Dabei drücken diese den nicht versdrehbaren Klauenring 9 gegen die Druckfeder 10, wobei die Verzahnung zwischen dem Wellring 8 und dem Klauenring 9 aufgrund der schrägen Zahnflanken der benachbarten Zähne von Wellring und Klauenring außer Eingriff gelangt. Durch ein gegenläufiges Auflaufen der Zähne über schiefe Ebenen wird ein sogenanntes Überschnappen der Verzahnung bewirkt und damit ein Überdrehen der Schraube 5 ausgeschlossen.
Beim Lösen der Schraube 5 in entgegengesetzter Richtung gelangen die geraden Zahnflanken von Wellring 8 und Klauenring 9 wieder in Eingriff und die Schraube kann problemlos gelöst werden. Zum Ablassen von Öl wird die Schraube 5 vollständig oder zumindest bis zur Freigabe der Auslassöffnung 1 herausgedreht. Da das die Auslassöffnung umgebende Bodenteil 2 der Ölwanne keinen nach innen gerichteten Rand oder Kragen aufweist und eben bzw. geringfügig zur Mittelachse geneigt ausgebildet ist, kann das in der Ölwanne befindliche Öl vollständig ablaufen.
Mit dem vorgeschlagenen Schraubverschluss ist ein unerwünschtes Überdrehen beim Einschrauben der Ölablassschraube 5 ausgeschlossen. Im fest angezogenen und vollständig abgedichteten Zustand der Auslassöffnung wird durch den von der Druckfeder 10 auf die Ablassschraube 5 ausgeübten Druck noch eine Selbstsicherung der Ablassschraube bewirkt, so dass ein unerwünschtes Lösen der Ablassschraube 5 nicht möglich ist.
Der Dom 3, die Ablassschraube 5, die Nuss 7, der Wellenring 8 und der Klauenring 9 können als spritzgegossene Kunststoffbauteile ausgebildet sein.

## Patentansprüche

1. Schraubverschluss für einen Flüssigkeitsbehälter, insbesondere eine Ölwanne für Kraftfahrzeuge, unter Verwendung einer Ablassschraube und einem elastomeren Dichtungselement zum dichten Verschließen der in dem Behälter angeordneten Ablassöffnung, **dadurch gekennzeichnet, dass** die Ablassöffnung (1) halsförmig ausgebildet ist und um die Ablassöffnung (1) ein in den Behälter ragender Dom (3) angeordnet ist, wobei der Dom (3) mindestens eine seitliche Öffnung (3e) besitzt und in dem Dom (3) ein ein Innengewinde aufweisendes Schraubelement (7) drehbar gehalten ist, in das die Ablassschraube (5) eindrehbar ist, wobei die Ablassschraube (5) einen Dichtungsring (11) zur radialen Abdichtung der halsförmigen Ablassöffnung (1) aufweist, und das Schraubelement (7) mit einer in dem Dom (3) angeordneten unter Vorspannung einer Druckfeder (10) stehenden Überdrehschutzeinheit (8, 9) in Wirkverbindung steht, und die Überdrehschutzeinheit (8, 9) nach Erreichen der Endstellung der eingedrehten Ablassschraube (5) mit dieser in Berührungskontakt steht und ein weiteres Eindrehen der Ablassschraube (5) verhindert.

2. Schraubverschluss nach Anspruch 1, **dadurch gekennzeichnet, dass** die Überdrehschutzeinheit aus einem Wellring (8) und einem auf diesem aufliegenden Klauenring (9) besteht, wobei der Wellring (8) axial verschiebbar und drehbar gelagert ist und formschlüssig mit dem Schraubelement (7) verbunden ist, und der Klauenring (9), an dem die Druckfeder (10) anliegt, axial verschiebbar und gegen Verdrehen gesichert ist, und die benachbarten Kontaktflächen von Wellring (8) und Klauenring (9) mit einer ineinander eingreifbaren Verzahnung (8c, 9a) ausgerüstet sind, wobei die Zähne (8c, 9a) eine gerade Zahnflanke (8e) und eine als schiefe Ebene ausgebildete Zahnflanke (8d) aufweisen, und durch ein gegenläufiges Auflaufen der als schiefe Ebene ausgebildeten Zahnflanken beim Eindrehen der Ablassschraube (5) nach Erreichen der Endstellung ein Überschnappen und Durchdrehen des Wellringes (8) erfolgt und beim Lösen der Ablassschraube (5) Wellring (8) und Klauenring (9) über die geraden Zahnflanken (8e) miteinander in Eingriff gelangen.

3. Schraubverschluss nach einem der Ansprüche 1 oder 2, **dadurch gekennzeichnet, dass** zwischen den beiden in Eingriff stehenden Verzahnungen von Wellring (8) und Klauenring (9) ein radiales Spiel vorhanden ist.

4. Schraubverschluss nach einem der Ansprüche 1 bis 3, **dadurch gekennzeichnet, dass** das Schraubelement (7) aus einer ringförmigen Scheibe (7a) mit einer aufgesetzten Schraubmutter (7b) besteht und in dem Unterteil (8a) des Wellringes (8) eine passgenaue Ausnehmung zur Aufnahme der Schraubmutter (7b) angeordnet ist.

5. Schraubverschluss nach einem der Ansprüche 1 bis 4, **dadurch gekennzeichnet, dass** der Wellring (8) aus einem annähernd ringförmigen Unterteil (8a) und einem annähernd zylinderförmigen Schaft (8b) besteht und der Klauenring (9) mit seiner ringförmigen Ausnehmung auf den Schaft (8b) aufgesteckt ist.

6. Schraubverschluss nach einem der Ansprüche 1 bis 5, **dadurch gekennzeichnet, dass** in dem Dom (3) ein Sicherungsring (6) zur Lagefixierung der unter Vorspannung der Druckfeder (10) stehenden Bauteile Klauenring (9), Wellring (8) und Schraubelement (7) eingesetzt ist.

7. Schraubverschluss nach einem der Ansprüche 1 bis 6, **dadurch gekennzeichnet, dass** die Ablassschraube (5) einen unteren Flansch (5a), einen sich daran anschließenden Schaft (5c) und Gewindeabschnitt (5d) besitzt, wobei der Flansch (5a) sich über die gesamte Höhe der halsförmigen Ablassöffnung (1) erstreckt und eine umlaufende Ringnut (5b) zur Aufnahme des Dichtringes (11) aufweist, der Schaft (5c) radial zurückgesetzt ist und eine obere Stirnfläche besitzt, die beim Eindrehen der Ablassschraube (5) in die Schraubmutter (7b) mit der ringförmigen Scheibe (7a) des Schraubelementes (7) in Berührungskontakt gelangt.

8. Schraubverschluss nach einem der Ansprüche 1 bis 7, **dadurch gekennzeichnet, dass** an der Unterseite des Wellringes (8) Profilierungen (8f) angeordnet sind, die in entsprechende Ausnehmungen (5f) an der oberen Stirnseite des Gewindeabschnittes (5d) der Ablassschraube (5) eingreifen oder umgekehrt.

9. Schraubverschluss nach einem der Ansprüche 1 bis 8, **dadurch gekennzeichnet, dass** der Dom (3) mehrere Befestigungsstellen (3b) zu seiner Befestigung mittels selbstschneidender Kunststoffschrauben (4) an dem Boden- oder Wandteil (2) besitzt.

10. Schraubverschluss nach einem der Ansprüche 1 bis 9, **dadurch gekennzeichnet, dass** der Dom (3) an seinem in Wand- oder Bodenrichtung zeigenden Ende mehrere seitlich vorstehende Flanschabschnitte (3a) besitzt, die in im Boden- oder Wandteil (2) angeordnete Führungen (2a) eingesetzt sind.

11. Schraubverschluss nach einem der Ansprüche 1 bis 10, **dadurch gekennzeichnet, dass** der Innenraum des Domes (3) leicht konisch ausgebildet ist und in einen oberen Abschnitt-(3f)-und einen unteren Abschnitt (3h) unterteilt ist, wobei in dem oberen Abschnitt (3f) an der Innenseite mehrere vertikal verlaufende Führungselemente (3d) zur Sicherung des Klauenringes (9) gegen Verdrehen angeordnet sind und in dem unteren Abschnitt (3h) eine Ringnut (3g) zur Aufnahme des Sicherungsringes (6) eingearbeitet ist.

12. Schraubverschluss nach einem der Ansprüche 1 bis 11, **dadurch gekennzeichnet, dass** der Dom (3) in seinem unteren Abschnitt (3h), im Bereich zwischen den Befestigungsstellen (3b), eine oder mehrere am Außenumfang verteilte Öffnungen (3e) besitzt.

13. Schraubverschluss nach einem der Ansprüche 1 bis 12, **dadurch gekennzeichnet, dass** die halsförmige Ablassöffnung (1) als ringförmiger, nach unten abstehender Bund ausgebildet ist und der an die Ablassöffnung (1) angrenzende Bodenabschnitt (2) des Behälters eben ausgebildet ist und die Öffnungen (3e) des Domes (3) sich in Höhe des Bodenabschnittes (2) befinden.

14. Schraubverschluss nach einem der Ansprüche 1 bis 13, **dadurch gekennzeichnet, dass** eines oder mehrere der Bauteile Dom (3), Nuss (7), Ablassschraube (5), Klauenring (9) und Wellring (8) als spritzgegossenes Kunststoffbauteil ausgebildet sind.

## Claims

1. Screwed cap for a liquid container, particularly an oil sump in motor vehicles, using a drain plug and an elastomer seal for tightly sealing the drain hole positioned in the container, **characterised in that** the drain hole (1) is neck-shaped and a dome (3) projecting into the container is positioned around the drain hole (1), whereby the dome (3) has at least one lateral opening (3e) and an internal thread on which the screw element (7) is rotatably held and into which the drain plug (5) can be screwed, whereby the drain plug (5) has a sealing ring (11) for the radial sealing of the neck-shaped drain hole (1) and the screw element (7) interacts operatively with an overtightening protection unit (8,9) positioned in the dome (3) and under the tension of a recoil spring (10) and the overtightening protection unit (8,9) is in contact with the drain plug (5) after it has been screwed in to its final position, thereby preventing the drain plug (5) from being screwed in further.

2. Screwed cap according to claim 1, **characterised in that** the overtightening protection unit consists of a corrugated ring (8) and a claw ring (9) resting on top, whereby the corrugated ring (8) is axially movable and rotatable and firmly connected with the screw element (7) and the claw ring (9), on which the recoil spring (10) rests, is axially movable and prevented from turning and the adjoining contact surfaces of the corrugated ring (8) and the claw ring (9) are fitted with teeth (8c, 9a) that can intermesh, whereby the teeth (8c, 9a) have a straight tooth flank (8e) flank and a bevelled tooth flank (8d) and the contrarotation of the latter tooth flanks, as the drain plug (5) is screwed in, cause the teeth of the corrugated ring (8) and the claw ring (9) to slip and slide over each other when the drain plug (5) has been screwed into its final position and when the drain plug (5) is unscrewed, the corrugated ring (8) and the claw ring (9) intermesh via the straight tooth flanks (8e).

3. Screwed cap according to one of the claims 1 or 2, **characterised in that** there is radial play between the intermeshed teeth of the corrugated ring (8) and the claw ring (9).

4. Screwed cap according to one of the claims 1 to 3, **characterised in that** the screw element (7) consists of a ring-shaped disc (7a) surmounted by a nut (7b) and that a precision-fitting recess is positioned in the lower part (8a) of the corrugated ring (8) to receive the nut (7b).

5. Screwed cap according to one of the claims 1 to 4, **characterised in that** the corrugated ring (8) consists of a lower part (8a), which is roughly ring-shaped, and a shaft (8b), which is roughly cylindrical in shape, and that the claw ring (9) with its ring-shaped recess is placed on top of the shaft (8b).

6. Screwed cap according to one of the claims 1 to 5, **characterised in that** a locking ring (6) is inserted in the dome (3) for fixing the position of the claw ring (9), corrugated ring (8) and screw element (7) components that are under the tension of the recoil spring (10).

7. Screwed cap according to one of the claims 1 to 6, **characterised in that** the drain plug (5) has a lower flange (5a), to which is attached a shaft (5c) and a threaded section (5), whereby the flange (5a) extends over the entire height of the neck-shaped drain hole (1) and has a circumferential snap ring groove (5b) to receive the sealing ring (11), the shaft (5c) has a smaller outside diameter than that of the flange and has an upper front surface that makes contact with the ring-shaped disc (7a) of the screw element (7) when the drain plug (5) is screwed into the nut (7b).

8. Screwed cap according to one of the claims 1 to 7, **characterised in that** profilings (8f) are positioned on the underside of the corrugated ring (8) which engage with corresponding recesses (5f) on the upper front side of the threaded section (5d) of the drain plug (5) or vice versa.

9. Screwed cap according to one of the claims 1 to 8, **characterised in that** the dome (3) has several fixing points (3b) for fixing it in place by means of self-cutting plastic screws (4) on the bottom or wall part (2).

10. Screwed cap according to one of the claims 1 to 9, **characterised in that** the dome (3) on its end pointing in the direction of the wall or bottom section has several laterally projecting flange sections (3a) which are inserted in guides (2a) positioned in the bottom or wall part (2).

11. Screwed cap according to one of the claims 1 to 10, **characterised in that** the interior of the dome (3) is slightly tapered and divided into an upper section (3f) and a lower section (3h), whereby several vertically running guide elements (3d) are positioned in the upper section (3f) on the inner surface to prevent the claw ring (9) from turning and a snap ring groove (3g) is incorporated in the lower section (3h) to receive the locking ring (6).

12. Screwed cap according to one of the claims 1 to 11, **characterised in that** the dome (3) has one or several openings (3e) distributed over its outer surface in its lower section (3h) in the area between the fixing points (3b).

13. Screwed cap according to one of the claims 1 to 12, **characterised in that** the neck-shaped drain hole (1) is formed as a ring-shaped flange widening out at its bottom section and the bottom section (2) of the container adjoining the drain hole (1) is similarly shaped and the openings (3e) of the dome (3) are at the height of the bottom section (2).

14. Screwed cap according to one of the claims 1 to 13, **characterised in that** one or several of the dome (3), nut (7), drain plug (5), claw ring (9) and corrugated ring (8) components are injection-moulded plastic components.

## Revendications

1. Bouchon destiné à un réservoir de liquide, notamment un carter d'huile pour véhicules automobiles, utilisant une vis de vidange et un élément d'étanchéité en élastomère destiné à fermer hermétiquement l'orifice de vidange disposé dans le réservoir, **caractérisé en ce que** l'orifice de vidange (1) présente une configuration en col et un dôme (3) pénétrant à l'intérieur du réservoir est disposé autour de l'orifice de vidange (1), le dôme (3) possédant au moins un orifice latéral (3e) et un élément à visser (7) présentant un filetage femelle, à l'intérieur duquel la vis de vidange (5) peut être rentrée, est maintenu dans le dôme (3) de façon à pouvoir tourner, la vis de vidange (5) présentant une bague d'étanchéité (11) destinée à assurer l'étanchéité radiale de l'orifice de vidange (1) en forme de col, et l'élément à visser (7) agit en coopération avec un limiteur de tours (8,9) disposé dans le dôme (3) et sollicité par la tension d'un ressort de compression (10) taré, le limiteur de tours (8, 9) touche la vis de vidange (5) après que celle-ci, une fois vissée à l'intérieur, a atteint la position terminale en l'empêchant de continuer à être vissée à l'intérieur.

2. Bouchon selon la revendication 1, **caractérisé en ce que** le limiteur de tours se compose d'une bague ondulée (8) et d'une bague à griffe (9) reposant sur la première, la bague ondulée (8) étant logée de façon à pouvoir tourner et se déplacer axialement, et étant assemblée à l'élément à visser (7) grâce à sa complémentarité de forme, la bague à griffe (9) contre laquelle est appliqué le ressort de compression (10) peut se déplacer axialement, mais ne peut pas tourner, les surfaces de contact adjacentes de la bague ondulée (8) et de la bague à griffe (9) sont équipées d'une denture (8c, 9a) pouvant mordre l'une dans l'autre, les dents (8c, 9a) présentant un flanc de dent droit (8e) et un flanc de dent réalisé en plan incliné (8d), la rencontre des flancs des dents réalisés en plan incliné lors du vissage de la vis de vidange fait que la bague ondulée (8) saute et tourne sans mordre, une fois la position terminale de la vis de vidange atteinte, en desserrant la vis de vidange (5), la bague ondulée (8) et la bague à griffe (9) viennent mordre l'une dans l'autre sur les flancs de dent droits (8e).

3. Bouchon selon l'une quelconque des revendications 1 ou 2, **caractérisé en ce que**, pour que la bague puisse sauter, il existe un jeu radial défini entre les deux dentures de la bague ondulée (8) et la bague à griffe (9) mordant l'une dans l'autre.

4. Bouchon selon l'une des revendications 1 à 3, **caractérisé en ce que** l'élément à visser (7) se compose d'une rondelle (7a) munie d'un écrou (7b) placé dessus, et un creux de forme adapté destiné à loger l'écrou (7b) est disposé dans l'élément inférieur (8a) de la bague ondulée (8).

5. Bouchon selon l'une quelconque des revendications 1 à 4, **caractérisé en ce que** la bague ondulée (8) se compose d'une partie inférieure (8a) presque annulaire, et d'une tige (8b) presque cylindrique et la bague à griffe (9) est insérée avec son creux annulaire sur la tige (8b).

6. Bouchon selon l'une quelconque des revendications 1 à 5, **caractérisé en ce qu'**une bague de sûreté (6) destinée à fixer dans leur position les composants bague à griffe (9), bague ondulée (8) et élément à visser (7) qui sont sollicités par la tension d'un ressort à compression (10) taré est insérée dans le dôme (3).

7. Bouchon selon l'une quelconque des revendications 1 à 6, **caractérisé en ce que** la vis de vidange (5) possède une bride inférieure (5a), une tige (5c) appliquée contre elle et une section filetée (5d), la bride (5a) s'étendant sur toute la hauteur de l'orifice de vidange (1) en forme de col et présentant une rainure annulaire continue (5b) destinée à loger la bague d'étanchéité (11), la tige (5c) est radialement en retrait et présente une face frontale supérieure qui vient toucher la rondelle (7a) de l'élément à visser (7) lorsque la vis de vidange (5) est vissée à l'intérieur de l'écrou (7b).

8. Bouchon selon l'une quelconque des revendications 1 à 7, **caractérisé en ce que** des profilages (8f) mordant dans des creux (5f) correspondants sur la face frontale supérieure de la section filetée (5d) de la vis de vidange (5) ou inversement sont disposés sur la face inférieure de la bague ondulée (8).

9. Bouchon selon l'une quelconque des revendications 1 à 8, **caractérisé en ce que** le dôme (3) possède plusieurs endroits de fixation (3b) afin d'être fixé à l'élément de fond ou de paroi (2) au moyen de vis autotaraudeuses (4) en matière synthétique.

10. Bouchon selon l'une quelconque des revendications 1 à 9, **caractérisé en ce que** le dôme (3) possède à son extrémité tournée vers la paroi ou le fond plusieurs sections de bride (3a) saillant latéralement qui sont insérées dans des guidages (2a) disposés dans l'élément de fond ou de paroi (2).

11. Bouchon selon l'une quelconque des revendications 1 à 10, **caractérisé en ce que** l'espace intérieur du dôme (3) présente une configuration légèrement conique et est divisé en une section supérieure (3f) et une section inférieure (3h), des éléments de guidage (3d) s'étendant verticalement étant disposés dans la section supérieure (3f) sur la paroi intérieure afin d'empêcher la bague à griffe (9) de tourner, et une rainure annulaire (3g) destinée à loger la bague de sûreté (6) est façonnée dans la section inférieure (3h).

12. Bouchon selon l'une quelconque des revendications 1 à 11, **caractérisé en ce que** le dôme (3) possède dans sa section inférieure (3h), dans la zone située entre les endroits de fixation (3b), un ou plusieurs orifices (3e) répartis sur la circonférence extérieure.

13. Bouchon selon l'une quelconque des revendications 1 à 12, **caractérisé en ce que** l'orifice de vidange (1) en forme de col est réalisé en collerette annulaire dépassant vers le bas, et la section du fond (2) du réservoir adjacente à l'orifice de vidange (1) présente une configuration plane et les orifices (3e) du dôme (3) se trouvent à hauteur de la section du fond (2).

14. Bouchon selon l'une quelconque des revendications 1 à 13, **caractérisé en ce que** l'un des composants ou plusieurs desdits composants dôme (3), élément d'écrou (7), vis de vidange (5), bague à griffe (9) et bague ondulée (8) sont réalisés en composants de matière synthétique moulés par injection.
